# EUROPEAN PATENT APPLICATION

(11) **EP 4 497 691 A1**
(43) Date of publication of application: **29.01.2025**
(21) Application number: 24185607.9
(22) Date of filing: 01.07.2024
(51) Int. Cl.: B64D 37/00, B64D 37/30, F17C 5/04, F17C 13/02, G01F 23/16

(54) **FUEL SYSTEM**

(30) Priority: 24.07.2023 GB 202311349
(71) Applicant: Airbus Operations Limited, Bristol BS34 7PA (GB)
(72) Inventor: PILKINGTON, Paul, Bristol, BS34 7PA (GB); VIGNOLA, Dylan, Bristol, BS34 7PA (GB); WOOD, Christopher, Bristol, BS34 7PA (GB)
(74) Representative: Farrow, James Anthony

(57) **Abstract**

Disclosed is a fuel system. The fuel system includes a chamber for storing a fuel, an optical differential pressure sensor, and one or more processors in communication with the optical differential pressure sensor. The optical differential pressure sensor is fluidically connected to the chamber and is configured to, when the fuel is stored in the chamber, output a signal indicative of a pressure difference in the optical differential pressure sensor to the one or more processors.

## Description

### TECHNICAL FIELD

The present invention relates to a fuel system, an aircraft fuel storage system, an aircraft and a method of gauging fuel.

### BACKGROUND

It may be desirable to gauge fuel stored within a chamber of a fuel system.

### SUMMARY

According to a first aspect, there is provided a fuel system comprising: a chamber for storing a fuel; an optical differential pressure sensor; and one or more processors in communication with the optical differential pressure sensor, wherein the optical differential pressure sensor is fluidically connected to the chamber and is configured to, when the fuel is stored in the chamber, output a signal indicative of a pressure difference in the optical differential pressure sensor to the one or more processors.

The use of an optical differential pressure sensor may reduce the total number of electrical connections in proximity of the chamber compared to the use of, for example, a capacitive differential pressure sensor. As only a non current carrying element (such as an optical fibre) of the optical differential pressure sensor may need to be near the diaphragm, any current carrying electronics (such as an optical interrogator connected to the optical fibre) can be positioned away from the chamber. This may help to reduce a likelihood of electrical arcing occurring close to the chamber. The optical differential pressure sensor may be configured to determine a pressure difference by measuring an optical path difference to determine deflection of the diaphragm. As the optical pressure sensor may use light to measure deflection of the diaphragm, the optical differential pressure sensor may be less susceptible to magnetic fields compared to, for example, a capacitive differential pressure sensor. This may increase accuracy and/or consistency of measurements made by the optical differential pressure sensor.

The one or more processors may be configured to gauge fuel stored within the chamber based on the signal output by the optical differential pressure sensor. The one or more processors may be in communication with the optical differential pressure sensor via an electrical or optical connection. The electrical connection may be a hard-wired connection between the optical differential pressure sensor and the one or more processors. The one or more processors may be in communication with the optical differential pressure sensor via a wireless connection. The wireless connection may comprise any suitable standard of wireless communication, such as Bluetooth or WiFi. The wireless connection may allow the one or more processors to be located remote from the chamber without requiring wiring between the one or more processors and the optical differential pressure sensor. This may reduce space taken up by wiring within the fuel system. This may allow electrical current carrying components to be located away from the chamber, which may reduce a likelihood of arcing occurring close to the chamber.

The one or more processors may be configured to determine a weight of fuel within the chamber. The one or more processors may be configured to determine a depth of fuel within the chamber. The weight of the fuel and/or the depth of the fuel may be indicative of an amount of fuel within the chamber. Using the optical differential pressure sensor to gauge the fuel within the chamber may be more accurate than using other means, such as a float, as the measurement is affected less by motion of the fuel within the chamber.

The one or more processors may be in communication with an aircraft controller, wherein the aircraft controller may be operable to control one or more systems of an aircraft (such as a warning system, a navigation system or an aircraft flight control system). The aircraft controller may be configured to control operation of the one or more systems of the aircraft in response to a signal received from the one or more processors (which may be based on a signal received from the optical differential pressure sensor).

The fuel system may comprise a memory, and the optical differential pressure sensor may be configured to output the signal indicative of the pressure differential across the diaphragm to the memory to be stored thereon. Storing data indicative of the pressure differential across the diaphragm on the memory may allow the data to be analysed at a later point in time. When the fuel system is installed on an aircraft, this may allow the data to be analysed after flight. The data may be stored as a message which is output on a post-flight report. The data may also be used to further improve the accuracy of gauging of the fuel stored in the chamber.

The one or more processors may be configured to cause an indication to be output to an operator, based on the signal received from the differential pressure sensor. The indication may take the form of a light in a cockpit of an aircraft (when the fuel system is installed on an aircraft). Alternatively or additionally, an indication may be shown on a screen within the cockpit, to inform a flight crew of a level of fuel stored within the chamber. This may allow the flight crew to be informed of the level of fuel and take any necessary action (such as arranging for refuelling or adjusting course). The indication may be that the fuel has fallen below a predetermined threshold. The predetermined threshold may correspond to an amount of fuel that is required to reach a target destination.

The optical differential pressure sensor may be located outside of the chamber. The optical differential pressure sensor being located outside of the chamber may reduce the likelihood of gases condensing within the optical differential pressure sensor, as the optical differential pressure sensor is less likely to come into contact with, and be cooled by, the cryogenic fuel. The optical differential pressure sensor may also be easier to maintain and/or replace as access into the chamber may not be required. Alternatively, the optical differential pressure sensor may be located within the chamber.

The optical differential pressure sensor may be positioned such that, when the fuel is stored in the chamber, the differential pressure sensor is located above a plane defined by a surface of the cryogenic fuel. As the optical differential pressure sensor is located above the surface of the fuel, any condensation within the optical differential pressure sensor may flow back toward the chamber rather than toward the optical differential pressure sensor.

The optical differential pressure sensor may be located in a vacuum. The vacuum may provide thermal insulation to the optical differential pressure sensor to reduce thermal ingress into the optical differential pressure sensor. This may reduce the likelihood of temperature variations within the optical differential pressure sensor, which may therefore increase accuracy of measurements by the optical differential pressure sensor. The vacuum may be a medium vacuum. The vacuum may have a pressure of between 100 Pa and 0.1 Pa. The optical differential pressure sensor may be located in a capsule area located outside of the chamber. The capsule area may be held at a medium vacuum, such as at a pressure of between 100 Pa and 0.1 Pa. The vacuum may provide thermal insulation to any components located within the capsule area.

The optical differential pressure sensor may be operable in a temperature range of between approximately 10K and 360K, such as between approximately 10K and 100K. This may allow the optical differential pressure sensor to operate in different climate and/or environments. As such, when the fuel system is installed in an aircraft, the optical differential pressure sensor may be capable of operating at differing temperatures while at altitude and while on the ground.

The optical differential pressure sensor may comprise a diaphragm, and the optical differential pressure sensor may be fluidically connected to the chamber such that, when the fuel is stored in the chamber, a gas is located on both sides of the diaphragm. Deflection of the diaphragm of the optical differential pressure sensor may be indicative of a pressure difference such that the deflection of the diaphragm may be measured to determine the differential pressure. As a gas is located on both sides of the diaphragm of the optical differential pressure sensor, this may reduce the likelihood of a liquid that is present on one or both sides of the diaphragm affecting the accuracy of measurements by the optical differential pressure sensor. Moreover, a gas being located on both sides of the diaphragm may result in the optical differential pressure sensor being less impacted by thermal transfer compared to if there was a liquid on one side of the diaphragm. This may reduce interference due to thermal transfer across the diaphragm where a lower temperature of the liquid may cause the gas to condense (at least temporarily), and a higher temperature of the gas may cause the liquid to evaporate.

When the fuel is stored in the chamber, the chamber may comprise a head space which is substantially free of fuel in a liquid state and a liquid space in which the fuel in the liquid state is located, and a first side of the diaphragm may be fluidically connected to the head space and a second side of the diaphragm is fluidically connected to the liquid space.

The optical differential pressure sensor may be configured to sense a pressure differential between the head space and the liquid space. This may allow a single optical differential pressure sensor to be used to determine the pressure differential between the head space and the liquid space. A weight of the fuel stored within the chamber may be determined based on the pressure differential between the head space and the liquid space.

The optical differential pressure sensor may be located in the head space of the chamber. This may reduce the likelihood of the optical differential pressure sensor being immersed in the fuel.

The cryogenic fuel storage system may comprise a first feed pipe and a second feed pipe, wherein the first side of the diaphragm is fluidically connected to the head space by the first feed pipe and the second side of the diaphragm is fluidically connected to the liquid space by the second feed pipe. The first and second feed pipes may allow the optical differential pressure sensor to be positioned away from the chamber. As such, the optical differential pressure sensor may be located away from the low temperatures of the fuel, which may reduce the likelihood of condensation and/or evaporation within the differential pressure sensor, improving accuracy and/or consistency of measurements.

The second feed pipe may extend into the chamber such that, when the fuel is stored within the chamber, the second feed pipe is at least partly submerged in the fuel. The fuel may assert a pressure on gas within the second pipe, which deflects the diaphragm of the optical differential pressure sensor. As such, the pressure applied to the diaphragm is representative of pressure of the fuel. The second feed pipe may the positioned such that it extends vertically through the chamber. The second feed pipe may extend through the head space and into the liquid space such that any fluid within the second feed pipe is guided into the liquid space. This may help to guide fluid away from the optical differential pressure sensor.

The first feed pipe and the second feed pipe may be thermally insulated. This may help to reduce heat transfer into and between the feed pipes, which may help to increase the accuracy of measurements of the pressure differential. The first feed pipe and the second feed pipe may be twisted together. At least one of the first feed pipe and the second feed pipe may be wrapped around the other of the second feed pipe and the first feed pipe. The first feed pipe and the second feed pipe may each comprise a substantially helical shape and may be intertwined about a common axis. This may help to equalise heat transfer between the feed pipes.

The fuel system may comprise multiple optical differential pressure sensors. This may provide redundancy in the event that one of the optical differential pressure sensors fails to operate correctly.

The fuel system may be pressurised. The fuel system may be pressurised to a least 1 bar (100 kPa), such as at least 2 bar (200 kPa), at least 3 bar (300 kPa) or at least 4 bar (400 kPa). The use of the optical differential pressure sensor in a pressurised fuel system may reduce or negate the effect of pressurisation compared to the use of absolute pressure sensors. As the pressurisation may be the same for the whole system, the pressurisation may be equal on both sides of the diaphragm. As the pressurisation may be equal on both sides of the diaphragm, the pressurisation may not itself cause a differential pressure across the diaphragm, meaning that the differential pressure sensed by the differential pressure sensor may not be influenced by the pressurisation. The use of the differential pressure sensor may therefore provide more accurate measurements compared to the use of absolute pressure sensors.

The fuel system may comprise a temperature sensor configured to determine a temperature of gas within the optical differential pressure sensor. Determining the temperature of gases within the optical differential pressure sensor may allow for a more accurate determination of the differential pressure. The temperature sensor may be located within the optical differential pressure sensor. The fuel system may comprise more than one temperature sensor, such as two, three or four temperature sensors. The fuel system may comprise a first temperature sensor located on the first side of the diaphragm and a second temperature sensor located on the second side of the diaphragm. This may allow the temperature of the gas on both sides of the diaphragm to be individually measured.

The fuel may comprise aviation fuel, such as avgas or kerosene. When the fuel is kerosene, gas being located on both sides of the diaphragm reduces likelihood of water contaminating the fuel becoming frozen and blocking the optical differential pressure sensor and/or the feed pipes when exposed to low temperatures. The chamber may comprise a cryogenic chamber for storing cryogenic fuel. The fuel may comprise a cryogenic fuel, such as liquid hydrogen. The fuel system may be configured to store the cryogenic fuel at between approximately 15K and 100K. This may help to maintain the cryogenic fuel in a liquid state.

According to a second aspect, there is provided an aircraft fuel system comprising the fuel system according to the first aspect.

According to a third aspect, there is provided an aircraft comprising the fuel system according to the first aspect or the aircraft fuel system according to the second aspect.

The chamber of the fuel system may be located within at least one of a wing of the aircraft and a tail section of the aircraft.

According to a fourth aspect, there is provided a method of gauging a fuel stored within a chamber, the method comprising: measuring a differential pressure in the chamber using an optical differential pressure sensor; outputting, by the optical differential pressure sensor, a signal indicative of the differential pressure; receiving, at one or more processors, the signal output by the differential pressure sensor; and based on the received signal, gauging the fuel stored within the chamber using the one or more processors.

The use of an optical differential pressure sensor may reduce the total number of electrical connections in proximity of the chamber compared to the use of an electrical differential pressure sensor, such as a capacitive differential pressure sensor. As only a non current carrying element (such as an optical fibre) of the optical differential pressure sensor may need to be near the diaphragm, any current carrying electronics (such as an optical interrogator connected to the optical fibre) may be positioned away from the chamber. This may help to reduce a likelihood of electrical arcing occurring close to the chamber. The optical differential pressure sensor may be configured to determine a pressure difference by measuring an optical path difference to determine deflection of the diaphragm.

The optical pressure sensor may use light to measure deflection of the diaphragm, such that the optical differential pressure sensor may be less susceptible to magnetic fields compared to, for example, a capacitive differential pressure sensor. This may increase the accuracy and/or consistency of measurements made by the optical differential pressure sensor.

The method may comprise causing an indication to be output based on the received signal. The indication may take the form of a light in a cockpit of an aircraft (when the chamber is located on an aircraft). Alternatively or additionally, an indication may be shown on a screen within the cockpit, to inform a flight crew of a level of fuel stored within the chamber. This may allow the flight crew to be informed of the level of fuel and take any necessary action (such as arranging for refuelling or adjusting course). The indication may be that the fuel has fallen below a predetermined threshold. The predetermined threshold may correspond to an amount of fuel that is required to reach a target destination.

Gauging the fuel stored in the chamber may comprise determining a weight of the fuel within the chamber. The gauging the fuel may comprise determining a depth of the fuel within the chamber. The weight of the fuel and/or the depth of the fuel may be indicative of an amount of fuel within the chamber. Using the optical differential pressure sensor to gauge the fuel within the chamber may be more accurate than using other means, such as a float connected to a rotary position sensor, as the measurement is affected less by motion of the fuel within the chamber.

The method may comprise gauging the fuel stored within the chamber based on the received signal using the one or more processors. This may allow the one or more processors to gauge the fuel without the use of external processing.

The method may comprise storing information indicative of the differential pressure across the diaphragm on a memory. Storing data indicative of the differential pressure across the diaphragm on the memory may allow the data to be analysed at a later point in time. When the chamber is installed on an aircraft, this may allow the data to be analysed after flight. The data may be stored as a message which is output on a post-flight report. The data may also be used to further improve the accuracy of gauging of the fuel stored in the chamber.

### BRIEF DESCRIPTION OF THE DRAWINGS

Embodiments of the invention will now be described, by way of example only, with reference to the accompanying drawings, in which:
Figure 1 shows a schematic cross-sectional view of a fuel system;
Figure 2 shows a schematic cross-sectional view of an optical differential pressure sensor;
Figure 3 shows a schematic view of an aircraft;
Figure 4 shows a schematic cross-sectional view of another fuel system; and
Figure 5 shows a flow chart of a method of gauging fuel stored within a chamber.

### DETAILED DESCRIPTION

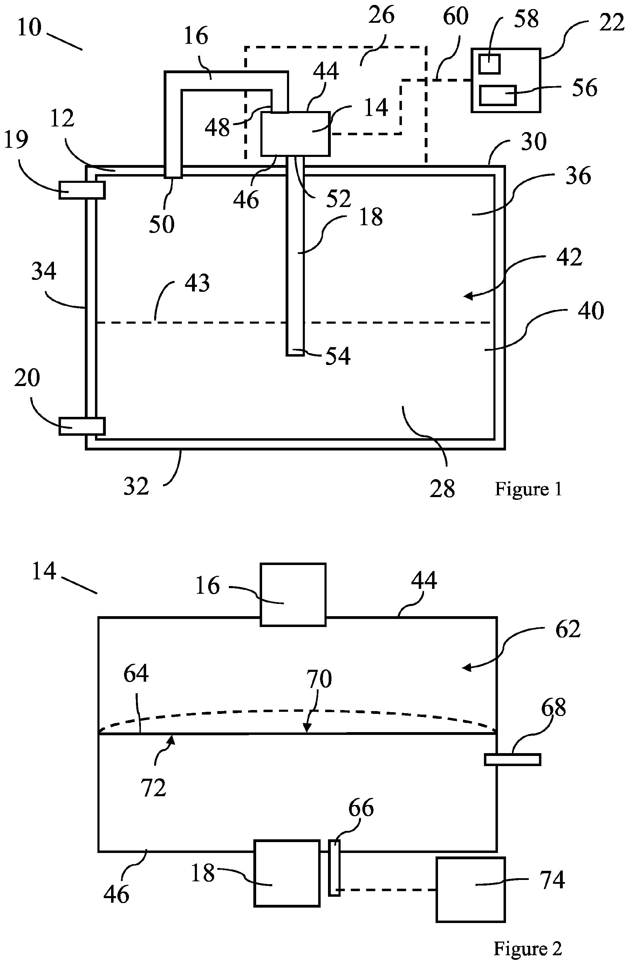

Figure 1 shows a schematic cross-sectional view of a fuel system 10 (which may be referred to as a cryogenic fuel storage system when storing a cryogenic fuel). The fuel system 10 comprises a chamber 12, an optical differential pressure sensor 14, a first feed pipe 16, a second feed pipe 18, a fluid inlet 19, a fluid outlet 20, a controller 22 and a capsule area 26. A fuel 28, in this case liquid hydrogen (LH2), is stored within the chamber 12. The fuel system 10 is pressurised to approximately 3 bar (300 kPa).

The chamber 12 comprises an upper wall 30, a lower wall 32, side walls 34 (two of which are shown in Figure 1) and an enclosed volume 42. The side walls extend between the upper wall 30 and the lower wall 32. The chamber 12 comprises a head space 36 in an upper section of the enclosed volume 42 and a liquid space 40 in a lower section of the enclosed volume 42. When the fuel 28 is stored in the chamber 12, the fuel 28 is located in the liquid space 40 in a liquid state while the head space 36 is substantially free of fuel 28 in the liquid state. The fluid inlet 19 extends into the head space 36 of the chamber 12 and the fluid outlet 20 extends into the liquid space 40 of the chamber 12. The fuel 28 is pumped into the chamber 12 through the fluid inlet 19 and is pumped out of the chamber 12 (such as to engines where the fuel 28 is combusted) through the fluid outlet 20.

The controller 22 comprises one or more processors 56 and a transceiver 58. The one or more processors 56 are in communication with the optical differential pressure sensor 14 via an electrical connection 60. The transceiver 58 is in communication with the one or more processors 56 and receives from the one or more processors 56 information indicative of a signal output by the optical differential pressure sensor 14. The transceiver 58 can then, if required, transmit the information received from the one or more processors 56 to a receiver at a different geographical location to the fuel system 10, such as to a control centre or an operations centre located at an airport.

The optical differential pressure sensor 14 is located outside of the chamber 12 and is installed within the capsule area 26. The capsule area 26 is hermetically sealed and is evacuated to a pressure of less than approximately 100 Pa. As such, the optical differential pressure sensor 14 is located within a medium vacuum inside the capsule area 26. As well as being located outside of the chamber 12, the optical differential pressure sensor 14 is also positioned such that the head space 36 is between the optical differential pressure sensor 14 and the liquid space 40. As such, the optical differential pressure sensor 14 is above a surface 43 of the fuel 28 stored within the chamber 12. In particular, the optical differential pressure sensor 14 is positioned above a plane defined by the surface 43 of the fuel 28 stored within the chamber 12.

The first feed pipe 16 extends from a first side 44 of the optical differential pressure sensor 14 to the head space 36 of the chamber 12. The second feed pipe 18 extends from a second, opposite side 46 of the optical differential pressure sensor 14 through the head space 36 of the chamber 12 into the liquid space 40. The first feed pipe 16 and the second feed pipe 18 comprise the same material and have the same inner diameter as each other.

The first feed pipe 16 comprises a first end 48 and a second end 50. The first end 48 of the first feed pipe 16 is fluidically connected to the first side 44 of the optical differential pressure sensor 14 and the second end 50 of the first feed pipe 16 is fluidically connected to the head space 36 of the chamber 12. The second feed pipe 18 also comprises a first end 52 and a second end 54. The first end 52 of the second feed pipe 18 is fluidically connected to the second side 46 of the optical differential pressure sensor 14 and the second end 54 of the second feed pipe 18 is submerged in the fuel 28 stored within the chamber 12.

The first feed pipe 16 and the second feed pipe 18 are both wrapped in thermally insulating material to thermally insulate the first feed pipe 16 and the second feed pipe 18 from each other and from an external environment. In some examples, not shown in the Figures, at least a part of the first feed pipe 16 and the second feed pipe 18 are twisted together. The respective parts of the first feed pipe 16 and the second feed pipe 18 each comprise a substantially helical shape and are intertwined about a common axis.

A schematic cross-sectional view of the optical differential pressure sensor 14 is shown in Figure 2. The optical differential pressure sensor 14 comprises a cavity 62, a diaphragm 64, an optical fibre 66 and a temperature sensor 68. The diaphragm 64 extends across the cavity 62 and creates a fluid tight seal between the first side 44 of the optical differential pressure sensor 14 and the second side 46 of the optical differential pressure sensor 14. A first side 70 of the diaphragm 64 is on the first side 44 of the optical differential pressure sensor 14 and a second side 72 of the diaphragm 64 is on the second side 46 of the optical differential pressure sensor 14.

As the optical differential pressure sensor 14 is located above the surface 42 of the fuel 28 stored in the chamber 12, the cavity 62 of the optical differential pressure sensor 14 is substantially free of any liquid fuel and gas is located on both sides of the diaphragm 64. This is because any liquid within the cavity will be encouraged by gravity away from the optical differential pressure sensor 14 and into the chamber 12.

As gas is located on both sides of the diaphragm 64 of the optical differential pressure sensor 14, this may reduce the likelihood of a liquid that is present on one or both sides of the diaphragm 64 affecting the accuracy of measurements by the optical differential pressure sensor 14. As the pressure differential may be larger, the optical differential pressure sensor 14 may be less sensitive than other sensors known in the art. Gas being located on both sides of the diaphragm 64 may also result in a reduction in the impact of a temperature differential across the diaphragm 64 compared to if there was a liquid on one side of the diaphragm 64. This may reduce interference due to thermal transfer across the diaphragm 64 where a lower temperature of the fuel 28 (in liquid form) may cause the gas to condense (at least temporarily), and a higher temperature of the gas may cause the fuel 28 to evaporate.

A pressure exerted on the first side 70 of the diaphragm 64 corresponds to the pressure in the head space 36 of the chamber 12 (also known as head pressure), while a pressure exerted on the second side 72 of the diaphragm 64 corresponds to a combination of the head pressure and the weight of the fuel 28 stored in the chamber 12. As such, the differential pressure between the first side 70 of the diaphragm 64 and the second side 72 of the diaphragm 64 corresponds to the weight of the fuel 28 within the chamber 12.

The optical fibre 66 extends into the optical differential pressure sensor 14 on the second side 46 of the optical differential pressure sensor 14. An optical interrogator 74 is attached to an end of the optical fibre 66 that is distal from the optical differential pressure sensor 14. The optical interrogator 74 injects light with known properties (such as amplitude and wavelength) into the optical fibre 66 and receives and analyses light reflected into the optical fibre 66. The optical fibre 66 is positioned such that light exiting the optical fibre 66 is incident on the diaphragm 64 and is reflected into the optical fibre 66. The optical interrogator 74 is in communication with the one or more processors 56 via an electrical connection and outputs a signal indicative of an amount the diaphragm 64 has deflected to the one or more processors 56.

The temperature sensor 68 is located on the first side 70 of the diaphragm 64 and comprises a thermocouple 76. In other examples, the temperature sensor 68 comprises another device capable of determining temperature, such as a thermistor. The temperature sensor 68 monitors a temperature of gas within the cavity 62 of the optical differential pressure sensor 14 and outputs a signal indicative of the temperature to the one or more processors 56. The temperature is then used by the one or more processors 56 when gauging the fuel within the chamber 12. Although only one temperature sensor 68 is shown in Figure 2, in some examples the optical differential pressure sensor 14 comprises two temperature sensors 68, with one temperature sensor 68 located on each side of the diaphragm 64, such that a temperature of gas on both sides of the diaphragm 64 can be measured.

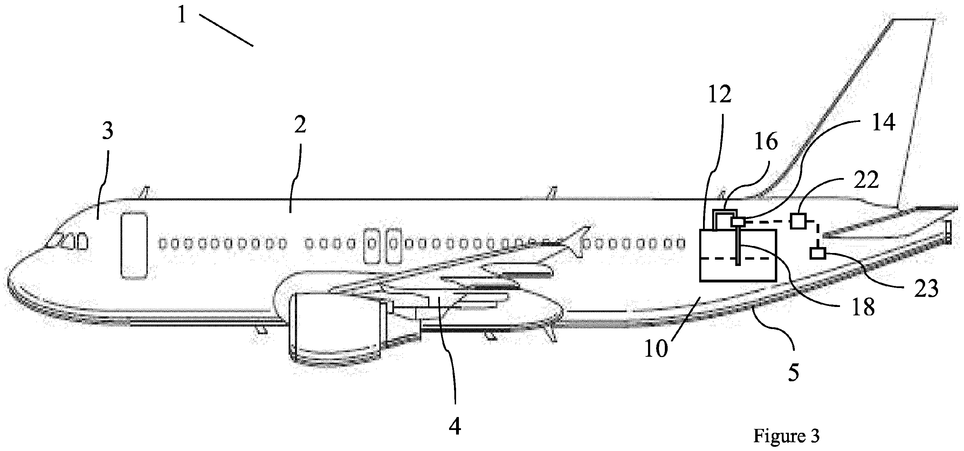

The fuel system 10 discussed above in relation to Figures 1 and 2 is an aircraft fuel system and an aircraft 1 comprising the fuel system 10 is shown in Figure 3. The aircraft 1 comprises a fuselage 2, a cockpit 3, two wings 4 and a tail section 5. The cockpit 3 comprises an interface, e.g. a joystick or dial, to control operation of the aircraft 1, and a display configured to display information about the aircraft 1 to a flight crew. The cockpit 3 also comprises a memory 6 to store information output by various aircraft systems.

The chamber 12 of the fuel system 10 is located in the tail section 5 of the aircraft 1. The fuel system 10 is installed such that when the aircraft 1 is on the ground (or at level flight), the optical differential pressure sensor 16 remains above a plane defined by the surface 42 of the fuel 28 stored within the chamber 12. The second feed pipe 18 also arranged such that when the aircraft 1 is on the ground, the second feed pipe 18 extends vertically into the chamber 12 with respect to the ground. While in this example the chamber 12 of the fuel system 10 is located in the tail section 5 of the aircraft 1, in some examples the chamber 12 is alternatively or additionally located within at least one of the wings 4. In the example illustrated in Figure 3, the controller 22 is in communication with an aircraft controller 23 which is in communication with other aircraft systems in addition to the fuel system 10.

When there is a pressure difference between the first side 70 of the diaphragm 64 and the second side 72 of the diaphragm 64, the diaphragm 64 will deflect towards either the first side 44 of the optical differential pressure sensor 14 or the second side 46 of the optical differential pressure sensor 14. For example, if a pressure on the first side 70 of the diaphragm 64 is greater than on the second side 72 of the diaphragm 64, the diaphragm 64 will deflect towards the second side 46 of the optical differential pressure sensor 14 (as shown by dashed lines in Figure 2). As the diaphragm 64 deflects due to the pressure difference, an optical path length of light reflected into the optical fibre 66 changes. The amount of deflection of the diaphragm 64 is indicative of the pressure difference across the diaphragm 64. The optical interrogator 74 calculates this change in optical path length to determine how much the diaphragm 64 has deflected.

The optical differential pressure sensor 14 outputs a signal indicative of the amount the diaphragm 64 has deflected (which is indicative of the pressure difference across the diaphragm 64) to the one or more processors 56 of the controller 22. Based on the signal received from the optical differential pressure sensor 14, the one or more processors 56 gauge the fuel 28 stored with the chamber 12 to determine a weight of the fuel 28 within the chamber 12. The one or more processors 56 of the controller 22 subsequently cause an indication to be provided on the display of the cockpit 3. The indication is provided by the display within the cockpit 3 of the aircraft 1 to inform the flight crew of the weight of the fuel 28 stored within the chamber 12. The flight crew may then take action if required based on the indication, such as by requesting refuelling or changing a route of the aircraft 1.

The use of an optical differential pressure sensor 12 to gauge the fuel 28 may reduce the total number of electrical connections with current running through them in proximity of the chamber 12 compared to the use of, for example, a capacitive differential pressure sensor. As only the optical fibre 66 needs to be near the diaphragm 64, the optical interrogator 74 (and any associated current carrying electronics) can be positioned away from the chamber 12.

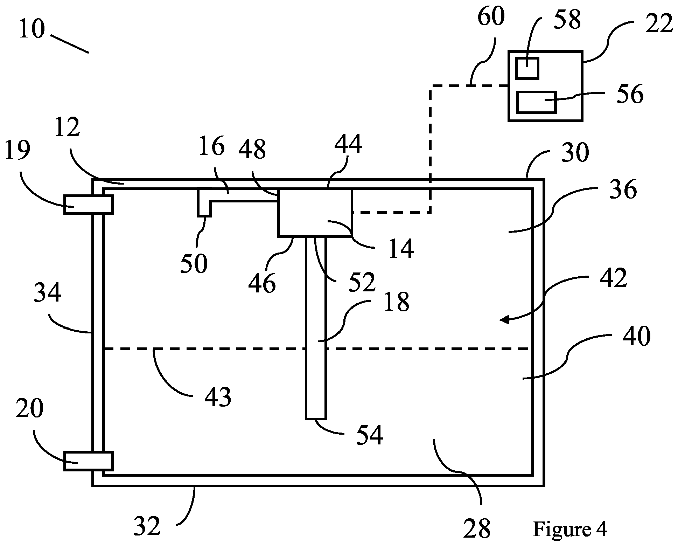

While in the example shown in Figures 1 to 3, the optical differential pressure sensor 14 is located outside of the chamber 12, Figure 4 shows an example in which the optical differential pressure sensor 14 is located within the head space 36 of the chamber 12. Like components is Figures 1 to 4 are labelled with like reference numerals.

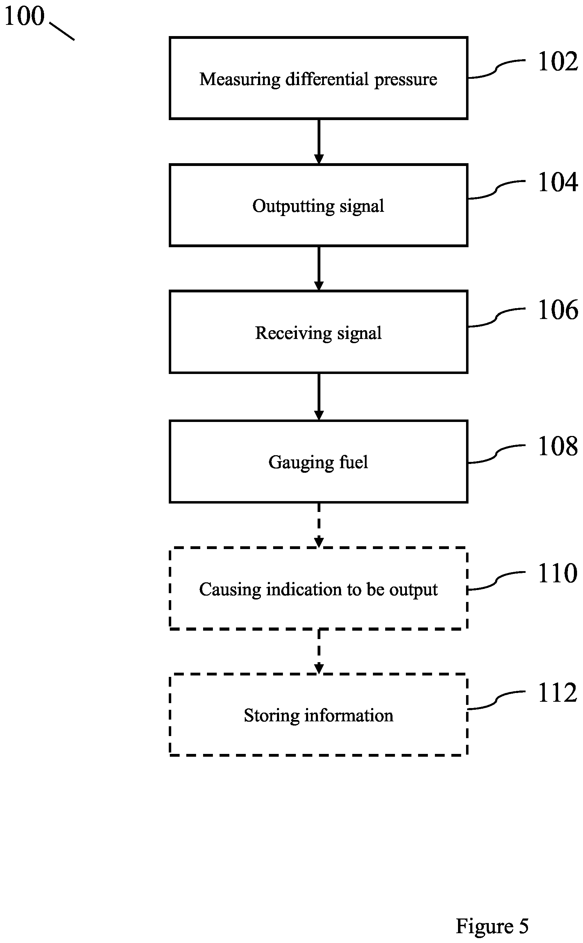

Figure 5 shows a flow chart of a method 100 of gauging the fuel 28 stored within the chamber 12, in accordance with the operation of the fuel system 10 described above. The method comprises measuring 102 a differential pressure in the chamber 12 using the optical differential pressure sensor 14 and outputting 104, by the optical differential pressure sensor 14, a signal indicative of the differential pressure.

The method 100 further comprises receiving 106, at the one or more processors 56, the signal output by the differential pressure sensor 14 and, based on the received signal, gauging 108 the fuel 28 stored within the chamber 12 to determine a weight of the fuel 28 within the chamber 12. In other examples, the gauging 108 comprises determining another property of the fuel 28, such as a depth of fuel 28 within the chamber 12. The gauging 108 is carried out by the one or more processors 56.

After the fuel 28 has been gauged, the method 100 comprises causing an indication to be output 110 based on the result of gauging 108 the fuel 28. The indication is provided by the display in the cockpit 3 of the aircraft 1 and informs the flight crew of the weight of the fuel 28 within the chamber 12.

The method 100 also comprises storing 112 information indicative of the differential pressure across the diaphragm 64 of the optical differential pressure sensor 14 on the memory 6.

In some examples, one or more of the steps of causing 110 an indication or storing 112 information indicative of the differential pressure may be omitted from the method 100.

Although in the examples described herein the one or more processors 56 are in communication with the optical differential pressure sensor 14 via an electrical connection 60, in other examples the one or more processors 56 are in communication with the optical differential pressure sensor 14 via wireless communication, such as WiFi, Bluetooth or other suitable wireless standard.

While the examples discussed above utilise an optical differential pressure sensor 14, it is understood that an arrangement where gas is located on both sides of a diaphragm may also be beneficial to other types of differential pressure sensor, such as capacitive differential pressure sensors. As gas is located on both sides of the diaphragm of the differential pressure sensor, this may reduce the likelihood of a liquid that is present on one or both sides of the diaphragm affecting the accuracy of measurements by the differential pressure sensor. Gas being located on both sides of the diaphragm may also result in the differential pressure sensor being less impacted by thermal transfer compared to if there was a liquid on one side of the diaphragm. This may reduce interference due to thermal transfer across the diaphragm where a lower temperature of the fuel (in liquid form) may cause the gas to condense (at least temporarily), and a higher temperature of the gas may cause the fuel to evaporate. Although a single optical differential pressure sensor 14 is shown in the fuel system 10 discussed above, in some examples a plurality of optical differential pressure sensors 14 are used with a single chamber 12.

While in the examples discussed above, the fuel 28 is liquid hydrogen, it is understood that the use of an optical differential pressure sensor to gauge fuel may be beneficial for other types of fuel, such as kerosene or avgas (aviation gasoline). The use of the optical differential pressure sensor may reduce the total number of electrical connections in proximity of the chamber compared to the use of, for example, a capacitive differential pressure sensor. As only a non current carrying element (such as an optical fibre 66) of the optical differential pressure sensor may need to be near the diaphragm, any current carrying electronics (such as the optical interrogator 74 connected to the optical fibre 66) can be positioned away from the chamber. This may help to reduce a likelihood of electrical arcing occurring close to the chamber.

It is to be noted that the term "or" as used herein is to be interpreted to mean "and/or", unless expressly stated otherwise.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A fuel system comprising:
a chamber for storing a fuel;
an optical differential pressure sensor; and
one or more processors in communication with the optical differential pressure sensor,
wherein the optical differential pressure sensor is fluidically connected to the chamber and is configured to, when the fuel is stored in the chamber, output a signal indicative of a pressure difference in the optical differential pressure sensor to the one or more processors.

2. The fuel system according to claim 1, wherein the one or more processors are configured to gauge fuel stored within the chamber based on the signal output by the optical differential pressure sensor.

3. The fuel system according to claim 1 or claim 2, wherein the one or more processors are configured to cause an indication to be output to an operator, based on the signal received from the differential pressure sensor.

4. The fuel system according to any one of claims 1 to 3, wherein the optical differential pressure sensor is located outside of the chamber.

5. The fuel system according to any one of claims 1 to 4, wherein the optical differential pressure sensor is positioned such that, when the fuel is stored in the chamber, the differential pressure sensor is located above a plane defined by a surface of the cryogenic fuel.

6. The fuel system according to any one of claims 1 to 5, wherein the optical differential pressure sensor is located in a vacuum.

7. The fuel system according to any one of claims 1 to 6, wherein the optical differential pressure sensor comprises a diaphragm, and wherein the optical differential pressure sensor is fluidically connected to the chamber such that, when the fuel is stored in the chamber, a gas is located on both sides of the diaphragm.

8. The fuel system according to claim 7, wherein, when the fuel is stored in the chamber, the chamber comprises a head space which is substantially free of fuel in a liquid state and a liquid space in which fuel in the liquid state is located, and wherein a first side of the diaphragm is fluidically connected to the head space and a second side of the diaphragm is fluidically connected to the liquid space.

9. The fuel system according to claim 8, comprising a first feed pipe and a second feed pipe, wherein the first side of the diaphragm is fluidically connected to the head space by the first feed pipe and the second side of the diaphragm is fluidically connected to the liquid space by the second feed pipe.

10. The fuel system according to claim 9, wherein the second feed pipe extends into the chamber such that, when the fuel is stored within the chamber, the second feed pipe is at least partly submerged in the fuel.

11. The fuel system according to claim 9 or claim 10, wherein the first feed pipe and the second feed pipe are thermally insulated.

12. The fuel system according to any one of claims 1 to 11, wherein the fuel system is pressurised.

13. The fuel system according to any one of claims 1 to 12, comprising a temperature sensor configured to determine a temperature of gas within the optical differential pressure sensor.

14. An aircraft comprising the fuel system according to any one of claims 1 to 13, optionally wherein the chamber of the fuel system is located within at least one of a wing of the aircraft and a tail section of the aircraft.

15. A method of gauging a fuel stored within a chamber, the method comprising:
measuring a differential pressure in the chamber using an optical differential pressure sensor;
outputting, by the optical differential pressure sensor, a signal indicative of the differential pressure;
receiving, at one or more processors, the signal output by the differential pressure sensor; and
based on the received signal, gauging the fuel stored within the chamber using the one or more processors.
